# EUROPEAN PATENT APPLICATION

(11) **EP 4 212 298 A1**
(43) Date of publication of application: **19.07.2023**
(21) Application number: 22151696.6
(22) Date of filing: 15.01.2022
(51) Int. Cl.: B27N 1/02, B27N 3/00, B27N 3/04, C08G 18/76

(54) **A PROCESS FOR PREPARING A WOOD-BASED PANEL**

(71) Applicant: Covestro Deutschland AG, 51373 Leverkusen (DE)
(72) Inventor: Gu, Xiaojun, Pudong Shanghai, 201206 (CN); Li, Liqiang, Pudong, Shanghai, 200120 (CN); Wang, Jian, Shanghai, 201203 (CN)
(74) Representative: Levpat

(57) **Abstract**

The present invention relates to a process for preparing a wood-based panel, a wood-based panel produced therewith and use thereof.

## Description

### Technical Field

The present invention relates to a process for preparing a wood-based panel, a wood-based panel produced therewith and use thereof.

### Background technology

Commercially available wood-based panels have the advantages of high strength, low specific gravity, easy processing, etc., but at the same time they have shortcomings such as easy moisture absorption and deformation in contact with water, low surface hardness, and poor impact resistance. Therefore, wood-based panels usually have to undergo a surface decorating treatment before use, and the surface is protected by the use of coatings, wear-resistant layers, PVC and other coating layers. How to improve the performance of various aspects of wood-based panels and optimize the relevant technologies is an urgent problem to be solved in the industry.

CN104039733B provides a process of applying a heat-insulating material to a glass fiber product composed of filiform glass fibers so as to substantially coat each of the filiform glass fibers therein, so that the coated filiform glass fiber imparts the heat resistance to the glass fiber product to form a melt-resistant glass fiber product.

CN1255273C relates to a three-layer structure wooden composite board and its manufacturing process, belonging to the technical field of architectural decoration.

DE4127158C2 discloses a molded board (1), especially a sheet, from waste materials (II), by chopping, mixing with 7-10 wt% isocyanate adhesive (III), and press-molding at 150-200 °C and 5-15 bar.

Despite the above disclosures, the market still urgently needs a process for preparing high-quality and durable wood-based panels.

### Summary of the Invention

The first aspect of the present invention is to provide a process for preparing a wood-based panel, which is produced by mixing a system including the following components:
A) at least one adhesive;
B) at least one reinforcing material, comprising:
   B1) at least one organic material in an amount of 40-90 wt%, preferably 45-70 wt%, based on the total absolute dry weight of said component B);
   B2) at least one inorganic material in an amount of 7-60 wt%, preferably 30-50 wt%, based on the total absolute dry weight of said component B).

Preferably, the weight ratio of B2) to B1) is 60:40-7:90, preferably 50:45-30:70.

Preferably, the A) adhesive is selected from one of isocyanate, urea-formaldehyde resin, phenolic resin, polyacrylic resin, polyvinyl acetate, ethylene modified polyvinyl acetate, polyvinyl alcohol, epoxy resin, silicone resin, unsaturated polyester, styrene resin glue, tannin resin glue, starch glue, lignin glue, protein glue or any combination thereof.

Preferably, the organic material is selected from one or more plant fibers of wood, sunflower stalk, wheat straw, bamboo, wood shaving, cotton stalk, bagasse and reed.

Preferably, the inorganic material is selected from inorganic fibers or inorganic particles, preferably quartz glass fiber, ceramic fiber, rock wool fiber, basalt fiber, metal fiber, inorganic mineral particle, whisker, recycled short glass fiber, preferably recycled short glass fiber.

Preferably, the water content of the organic material is 2.5-12%, based on the total weight of the organic material.

Preferably, the amount of the component A) is 1-20 wt%, preferably 1-15 wt%, more preferably 1-10 wt%, based on the total absolute dry weight of said system.

Preferably, component A) is selected from isocyanates comprising A1) 2,2'-diphenylmethane diisocyanate in an amount of 3.0-20 wt%, preferably 5.0-20 wt%, more preferably 7.0-20 wt%, particularly preferably 8.0-18 wt%, based on the total weight of component A).

Preferably, component A) is selected from isocyanates comprising A2) 2,4'-diphenylmethane diisocyanate in an amount of ≤ 30 wt%, preferably 1-25 wt%, based on the total weight of component A).

Preferably, component A) is selected from isocyanates comprising A3) 4,4'-diphenylmethane diisocyanate in an amount of ≤ 41 wt%, preferably 20-41 wt%, particularly preferably 28-37 wt%, based on the total weight of component A).

Preferably, said inorganic material has a water content of 7-25wt%, based on the total weight of the inorganic material.

Preferably, the diameter of the inorganic material is ≤ 2 mm, preferably ≤ 1.5 mm, more preferably ≤ 1.2 mm, particularly preferably 0.3-1 mm. The term "diameter" as used in the context of the present invention is to be understood as average diameter of all particles of the inorganic material.

Preferably, compared to the wood-based panel produced by the process not comprising mixing component B2) (at least one inorganic material), the wood-based panel produced by the process comprising mixing component B2) in an amount of 7-60 wt%, based on the total absolute dry weight of component B), has a density increased by ≥ 15%, preferably ≥ 20%. Specifically, if the density of the wood-based panel produced by the process not comprising mixing component B2) is X, and the density of the wood-based panel produced by the process comprising mixing component B2) in an amount of 7-60 wt%,, based on the total absolute dry weight of component B) is Y, the increased value for the density of the inventive wood-based panel is (Y-X)/X*100%.

Preferably, compared to the wood-based panel produced by the process not comprising mixing component B2), the wood-based panel produced by the process comprising mixing component B2) in an amount of 7-60 wt%, based on the total absolute dry weight of component B), has a Shore D hardness increased by ≥ 10%, preferably ≥ 15%. Specifically, if the Shore hardness of the wood-based panel produced by the process not comprising mixing component B2) is K, and the Shore D hardness of the wood-based panel produced by the process comprising mixing component B2) in an amount of 7-60 wt%, based on the total absolute dry weight of component B), is J, the increased value for the Shore D hardness of the inventive wood-based panel is (J-K)/K* 100%.

Preferably, the process further comprises a step of introducing the at least one adhesive at an introduction rate into a mixer or a mold at a pressure of 1.2-16 bar, preferably 1.4-12 bar with a pump.

Preferably, the introduction rate of the at least one adhesive is 1.2-25 kg/min, preferably 1.5-20 kg/min (testing method is mass flowmeter measurement).

Preferably, the process further comprises reacting and curing the system at room temperature and/or under a heating condition, preferably under a condition of heating to 90-250°C, more preferably heating to 180-250°C to obtain the wood-based panel.

Preferably, the thickness of the surface layer is 0.5-15 mm, preferably 1-3 mm.

Preferably, the thickness of the core or bottom layer is 3-18 mm, preferably 5-8 mm.

Preferably, the board is selected from particle board, fiber board, chip board, OSB, straw board, plywood or a combination thereof and the like.

Another aspect of the present invention is to provide a wood-based panel produced by the process for preparing a wood-based panel of the present invention.

Preferably, the wood-based panel has a density of 650-1200 kg/m³, preferably 680-1150 kg/m³ (refer to GB/T17657-2013 for the testing method).

Preferably, said wood-based panel has a surface Shore D hardness of ≥ 65, preferably 65-90, more preferably 70-89.

Preferably, the thickness swelling after 24 h of immersion in water of the wood-based panel is ≤ 5%, preferably ≤ 3%, more preferably ≤ 2% (refer to GB/T17657-2013 for the testing method).

Preferably, compared to the wood-based panel produced by a process not comprising mixing an inorganic material, said wood-based panel produced by a process comprising mixing B2) (an inorganic material) in an amount of 7-60 wt%, based on the total absolute dry weight of component B), has a thickness swelling after 24 h of immersion in water decreased by ≥ 30%, preferably ≥ 40%, more preferably ≥ 50% (refer to GB/T17657-2013 for the testing method). Specifically, if the thickness swelling after immersion in water of the wood-based panel produced by a process not comprising mixing component B2) is M, and the thickness swelling after immersion in water of the wood-based panel produced by a process comprising mixing component B2) in an amount of 7-60 wt%, based on the total absolute dry weight of component B), is N, the decreased value for the thickness after immersion in water of the inventive wood-based panel is (M-N)/M*100%.

Preferably, compared to the wood-based panel produced by a process not comprising mixing component B2), the wood-based panel comprising component B2) in an amount of 7-60 wt%, based on the total absolute dry weight of component B), has a density increased by ≥ 15%, preferably ≥ 20%.

Preferably, compared to the wood-based panel not comprising component B2), the wood-based panel produced by a process comprising mixing component B2) in an amount of 7-60 wt%, based on the total absolute dry weight of component B), has a Shore D hardness increased by ≥ 10%, preferably ≥ 15%.

Preferably, the elastic modulus of the wood-based panel is ≥ 2446MPa, preferably ≥ 2600MPa

(testing method GB/T17657-2013, testing method for physical and chemical properties of wood-based panels and surface-decorated wood-based panels).

Preferably, compared to the wood-based panel not comprising component B2), the wood-based panel produced by a process comprising mixing component B2) in an amount of 7-60 wt%, based on the total absolute dry weight of component B), has an elasticity modulus increased by ≥ 5%, preferably ≥ 10% (testing method GB/T17657-2013, testing method for physical and chemical properties of wood-based panels and surface-decorated wood-based panels). Specifically, if the elasticity modulus of the wood-based panel not comprising component B2) is S, and the elasticity modulus of a wood-based panel produced by a process comprising mixing component B2) in an amount of 7-60 wt%, based on the total absolute dry weight of component B), is T, the increased value for the elasticity modulus of the inventive wood-based panel is (T-S)/S*100%.

Another aspect of the present invention is a wood-based panel product, comprising the wood-based panel of the present invention.

Preferably, said wood-based panel product comprises at least two layers, including at least one surface layer comprising said wood-based panel of the present invention and at least one core or bottom layer.

Preferably, said wood-based panel product is selected from the group consisting of wardrobes, office desks and chairs, floors, bed boards, sofa chairs, cabinets, bathroom cabinets, billiard tables, table tennis tables, and kitchen countertops.

Unexpectedly, we have found that the process of the present invention can produce a wood-based panel with high strength, low specific gravity, and easy processing, which can produce a wood-based panel surface with high hardness, low water absorbance, low flammability, and good in water and fire resistance without surface decorating treatment. Besides, the wood-based panel has relatively high elastic modulus, and is capable of satisfying a variety of applications. We have found that without necessity of adding polyols or other auxiliary agents, we can produce attractive and durable wood-based panels having high-quality, and low thickness swelling after immersion in water. The process of the present invention not only simplifies the technological process and saves raw materials, but also turns waste into treasure, reduces pollution, and is more friendly to the environment.

In particular, the wood-based panel prepared by the process of the present invention including recycled inorganic materials can not only meet the requirements of physical properties, but also can unexpectedly increase its elastic modulus, reduce its thickness swelling after immersion in water, and make the wood-based panel products more beautiful, durable, easy to carry and move, making more comprehensive use into possibility. In addition, it has also opened up the application fields of inorganic materials (such as glass fibers) that are difficult to be recycled and reused, and therefore can not only turn waste into treasure simply and cost-effectively, and economize manpower and material resources, but also can save labor and material and reduce emissions, protect the environment, and contribute to the sustainable development of mankind.

### Detailed description of the invention

Now, various aspects of the present invention will be described in detail.

### The components and raw materials of the system for preparing the wood-based panel Adhesive

Preferably, the A) adhesive is selected from one of isocyanate, urea-formaldehyde resin, phenolic resin, polyacrylic resin, polyvinyl acetate, ethylene modified polyvinyl acetate, polyvinyl alcohol, epoxy resin, silicone resin, unsaturated polyester, styrene resin glue, tannin resin glue, starch glue, lignin glue, protein glue or any combination thereof.

### Polyisocyanate

The adhesive of the present invention is preferably an isocyanate. The isocyanate may comprise any polyisocyanate, including aromatic, aliphatic and alicyclic polyisocyanates and a combination thereof. The polyisocyanate may be represented by a general formula R(NCO)n, wherein R represents an aliphatic hydrocarbon group having 2-18 carbon atoms, an aromatic hydrocarbon group having 6-15 carbon atoms, and an araliphatic hydrocarbon group having 8-15 carbon atoms, and n = 2-4.

Usable polyisocyanates comprise, preferably, but are not limited to, vinyl diisocyanate, tetramethylene 1,4-diisocyanate, hexamethylene diisocyanate (HDI), dodecylene 1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane, hexahydrotoluene-2,4-diisocyanate, hexahydrophenyl-1,3-diisocyanate, hexahydrophenyl-1,4-diisocyanate, perhydro-diphenylmethane-2,4-diisocyanate, perhydro-diphenylmethane-4,4-diisocyanate, phenylene-1,3-diisocyanate, phenylene-1,4-diisocyanate, stilbene 1,4-diisocyanate, 3,3-dimethyl-4,4-diphenyldiisocyanate, toluene-2,4-diisocyanate (TDI), toluene-2,6-diisocyanate (TDI), diphenylmethane-2,4'-diisocyanate (MDI), diphenylmethane-2,2'-diisocyanate (MDI), diphenylmethane-4,4'-diisocyanate (MDI), a mixture of a diphenylmethane diisocyanate and/or a diphenylmethane diisocyanate homologue having more rings, polyphenylmethane polyisocyanate (polymeric MDI), naphthylene-1,5-diisocyanate (NDI), their isomers, and any mixture of them and their isomers.

Usable polyisocyanates also comprise isocyanates obtained by modification with a carbodiimide or an allophanate, and are preferably, but not limited to diphenylmethane diisocyanate, carbodiimide modified diphenylmethane diisocyanate, their isomers, and any mixture of them and their isomers.

Optionally, polyisocyanates comprise isocyanate dimers, isocyanate trimers, isocyanate tetramers, or a combination thereof.

The polycyclic polymeric isocyanate according to the present invention refers to a polymer of a tricyclic or higher isocyanate, and does not include a polymer of a diisocyanate.

Preferably, the component A) isocyanates of the present invention has a viscosity of 50-160 mPa·s (25 °C), preferably 60-125 mPa·s (25 °C).

Preferably, the component A) isocyanates is used in an amount of 1-10 wt%, preferably 2.5-7 wt%, based on the total absolute dry weight of the fibers.

### Reinforcing material

The reinforcing material of the present invention refers to a substance added to the resin that can be closely combined with the resin and significantly improve the mechanical and dynamical properties of the manufactured product. The reinforcing material of the present invention comprises organic materials/fibers and inorganic materials.

The organic material of the present invention refers to a material containing an organic substance. Organic substances refer to the main substances of which various living organisms are composed, such as proteins, pigments, etc. Materials composed of various organic substances are organic materials. Organic materials can be divided into two categories: natural organic materials from the biological universe and artificially synthesized organic materials. The organic material of the present invention includes fiber, which refers to a substance composed of continuous or discontinuous filaments. As the fiber of the present invention, a plant fiber is preferable. The plant fiber refers to a fiber obtained from plant seeds, fruits, stems, leaves, etc., including a fiber obtained from plant bast such as flax, jute, apocynum, etc., or a fiber obtained from plant leaves such as sisal hemp, abaca, etc. It can be specifically derived from trees, such as basswood, birch, ashtree, beech, mono maple, meranti, or any combination thereof (also called miscellaneous tree or mixed wood), etc., or other plants such as wheat straw, bamboo stalk, wood shaving, cotton stalk, bagasse and reed, etc. Preferably, the organic material is selected from one or more plant fibers of wood, sunflower stalk, wheat straw, bamboo, wood shaving, cotton stalk, bagasse and reed.

The inorganic material of the present invention refers to a material made of inorganic substances alone or mixed with other substances. Usually it refers to a material prepared by a certain process from raw materials such as a silicate, an aluminate, a borate, a phosphate, a germanate, etc. and/or raw materials such as oxides, nitrides, carbides, borides, sulfides, silicides, halides, etc. Preferably, the inorganic material is selected from inorganic fibers or inorganic particles, preferably quartz glass fiber, ceramic fiber, rock wool fiber, basalt fiber, metal fiber, inorganic mineral particle, whisker, recycled short glass fiber, preferably recycled short glass fiber.

### Polyol component

As mentioned above, the system of the present invention may also comprise polyols. Usable polyols preferably comprise various polyether polyols and/or a mixture thereof. At least one of the polyether polyols may be a glycerol-initiated polyol. The polyether polyol may have a functionality of 2-4 and a hydroxyl value of 20-600, preferably 50-500, particularly preferably 300-400.

The polyether polyol can be prepared by a known technological process. Usually it is prepared by mixing ethylene oxide or propylene oxide with ethylene glycol, 1,2-propylene glycol, 1,3-propylene glycol, diethylene glycol, glycerol, trimethylolpropane, pentaerythritol, triethanolamine, toluene diamine, sorbitol and sucrose, and using glycerol or propylene glycol as the initiator.

In addition, a polyether polyol can also be prepared by reacting at least one alkylene oxide containing a 2-4 carbon atom alkylene with a compound containing 2-8, preferably but not limited to, 3-8 active hydrogen atoms or other reactive compound(s) in the presence of a catalyst.

Examples of the catalyst include alkali metal hydroxides such as sodium hydroxide, potassium hydroxide, or alkali metal alkoxides such as sodium methoxide, sodium ethoxide or potassium ethoxide or potassium isopropoxide.

The useful alkylene oxide comprises, but is not limited to, tetrahydrofuran, ethylene oxide, 1,2-propylene oxide, 1,2-butylene oxide, 2,3-butylene oxide, styrene oxide, and any mixtures thereof.

Useful compounds containing active hydrogen atoms include polyhydroxy compounds, preferably, but not limited to, water, ethylene glycol, 1,2-propylene glycol, 1,3-propylene glycol, diethylene glycol, trimethylolpropane, and any mixtures thereof, more preferably polyhydric, especially trihydric or more polyhydric alcohols, such as glycerol, trimethylolpropane, pentaerythritol, sorbitol and sucrose. Useful compounds containing active hydrogen atoms further comprise, preferably but is not limited to, organic dicarboxylic acids such as succinic acid, adipic acid, phthalic acid and terephthalic acid, or aromatic or aliphatic substituted diamines such as ethylene diamine, diethylene triamine, triethylene tetramine, propylene diamine, butylene diamine, hexamethylene diamine or toluene diamine.

### Catalyst

The system of the present invention may comprise a catalyst. Catalysts that can be selected and used include but are not limited to amine catalysts and alkali metal catalysts. Suitable amine catalysts can be one of triethylamine, tributylamine, triethylenediamine, N-ethylmorpholine, N,N,N',N'-tetramethyl-ethylenediamine, pentamethyldiethylene-triamine, N,N-methylaniline, N,N-dimethylaniline, or any mixture thereof.

The system of the present invention may also contain no catalyst. Through repeated experiments, it has been surprisingly found that by using a system comprising 2,2'-diphenylmethane diisocyanate in an appropriate amount and isocyanates having a certain viscosity, it is unnecessary to use a catalyst to increase its activity, that is, high-quality formaldehyde-free wood-based panels can be produced in absence of a catalyst, which also saves the cost and optimizes the process. Moreover, it can also increase the output and production efficiency of wood-based panels.

Unless explained otherwise, all technical and scientific terms used herein have the same meanings as commonly understood by those skilled in the art to which this invention belongs. To the extent that the definitions of terms herein conflict with the meanings commonly understood by those skilled in the art to which this invention belongs, the definitions set forth herein prevail.

Unless otherwise indicated, all numbers expressing quantities of ingredients, reaction conditions, and the like used herein are to be understood as being modified by the term "about".

The expression "and/or" as used herein means one or all of the mentioned elements.

The use of "comprise" and "contain" herein encompasses the presence of the mentioned elements alone and the presence of other elements not mentioned in addition to the mentioned elements.

Unless otherwise stated, all percentages herein are percentages by weight.

The present invention is now described by the examples for illustrative purposes rather than limitation.

### Examples

### Description of test items and testing method:

Density, refers to the calculated density of a wood-based panel sampled and tested, testing method: GB/T17657-2013;

The absolute dry weight refers to the weight after removing the moisture of an article (such as fiber) by drying (e.g. heating to 100°C or above).

Internal bond strength refers to the internal bond strength of a wood-based panel, testing method GB/T17657-2013.

Surface hardness/surface Shore hardness refers to the ability of a material to partially resist hard objects pressed into its surface. In the testing method, a durometer is used to measure according to the Shore D hardness standard operation specifications.

Elastic modulus refers to the change in the shape of an elastomer when an external force is applied to the elastomer; specifically, it is the stress in a uniaxial stress state divided by the strain in that direction; the testing method is GB/T17657-2013, testing method for physical and chemical properties of wood-based panels and surface-decorated wood-based panels.

The static bending strength refers to the pressure strength that the wood-based panel can withstand when it is bent to fracture under stress; the testing method is GB/T17657-2013, testing method for physical and chemical properties of wood-based panels and surface-decorated wood-based panels.

Thickness swelling after immersion in water refers to the ratio of the thickness difference before and after water absorption to the thickness before immersion in water, measured after a certain amount of wood-based panel samples are immersed in water for a certain period of time (e.g., 24 hours) according to the process specified in the standard (the present invention refers to GB/T17657-2013).

Raw material description:
Adhesive: isocyanate, Desmodur^{®} 1520 A18: having a viscosity of 80 mPa·s (25°C), purchased from Covestro Polymers (China) Co., Ltd.;
Inorganic materials: inorganic fiber (glass fiber), recycled scrap from waste printed circuit boards, from Suzhou Haizhou Material Recycling Co., Ltd.;
Organic materials: organic fiber, miscellaneous tree/mixed wood fiber shaving (water content 6%), purchased from Danzhou Huasheng Wood-based panel Co., Ltd.

### Example 1:

The miscellaneous tree fiber shaving and the inorganic fiber were respectively placed in two different glue mixers in an absolute dry weight ratio of 1:1. Water was supplemented to the inorganic fiber to reach a water content of 16 wt%, based on the total weight of the inorganic fiber and added water, and to the mixed wood fiber shaving to reach a water content of 8 wt%, based on the total weight of the mixed wood fiber shaving and added water. Then the adhesives were respectively pumped at a pressure of 1.65-1.85 bar and introduced into two glue mixers at a rate of 1.2-25 kg/min (the amounts of the added adhesives were 10 wt% based on the weight of the reinforcing material and 3 wt% based on the weight of the miscellaneous tree fiber shaving) and sprayed by air atomization. The two materials were taken out and introduced into a mold at the same rate as the aforementioned. Among others, the inorganic fiber was in the upper and lower layers (the weights of the upper and lower layers were identical), and the miscellaneous tree fiber shaving was in the middle layer. The mold was heated to 195°C and hot pressed for 210 seconds. After the adhesive was cured, the molded product was taken out to obtain a wood-based panel. The produced wood-based panel had a thickness of 15 mm. The relevant test data were shown in Table 1.

### Comparative Example 1:

The miscellaneous tree fiber shaving was divided fine shaving and coarse shaving, and two shavings were respectively placed in two different glue mixers in an absolute dry weight ratio of 2:3. Water was supplemented to the fine shaving to reach a water content of 16 wt%, based on the total weight of the fine tree fiber shaving and added water, and to the coarse shaving to reach a water content of 8 wt%, based on the total weight of the coarse tree fiber shaving and added water. Then the adhesives were respectively pumped at a pressure of 1.65-1.85 bar and introduced into two glue mixers at a rate of 1.2-25 kg/min (the amounts of the added adhesives were 4 wt% based on the weight of the fine shaving and 3 wt% based on the weight of the coarse shaving) and sprayed by air atomization. The two materials were taken out and introduced into a mold at the same rate as the aforementioned. Among others, the fine shaving was in the upper and lower layers (the weights of the upper and lower layers were identical), and the coarse shaving was in the middle layer. The mold was heated to 195°C and hot pressed for 210 seconds. After the adhesive was cured, the molded product was taken out to obtain a wood-based panel. The produced wood-based panel had a thickness of 15 mm. The relevant test data were shown in Table 1.

**Table 1: Test results of Example 1 and Comparative Example 1**

| | Comparative Example 1 | Example 1 |
|---|---|---|
| Density (kg/m³) | 680 | 905 |
| Thickness swelling after immersion in water (24 hours) | 11.3% | 0.7% |
| Static bending strength | 15.83 Mpa | 15.9Mpa |
| Elasticity modulus | 2447 Mpa | 2849Mpa |
| Internal bond strength | 0.52 Mpa | 0.92Mpa |
| Surface hardness (Shore hardness) | 60D | 76D |

From the data in Table 1 above it can be seen that the wood-based panel of Example 1 had a significantly lower thickness swelling after immersion in water than that of Comparative Example 1, and the density, hardness and elastic modulus thereof were greatly improved, and the produced wood-based panel products had superior quality and were suitable for various applications.

Although the present invention has been described in detail in the foregoing for the purpose of the present invention, it is to be understood that such detail is solely for the purpose of illustration and that various changes can be made by those skilled in the art without departing from the spirit and scope of the invention except as it may be limited by the claims.

## Claims

1. A process for preparing a wood-based panel, which is produced by mixing a system comprising the following components:
A) at least one adhesive;
B) at least one reinforcing material, comprising:
B1) at least one organic material in an amount of 40-90wt%, preferably 45-70wt%, based on the total absolute dry weight of said component B);
B2) at least one inorganic material in an amount of 7-60 wt%, preferably 30-50 wt%, based on the total absolute dry weight of said component B).

2. The process according to claim 1, **characterized in that** the weight ratio of B2) to B1) is 60:40-7:90, preferably 50:45-30:70.

3. The process according to claim 1 or 2, **characterized in that** Component A) is selected from isocyanates comprising A1) 2,2'-diphenylmethane diisocyanate in the content of 3.0-20 wt%, preferably 5.0-20 wt%, more preferably 7.0-20 wt%, particularly preferably 8.0-18 wt%, based on the total weight of component A).

4. The process according to any of claims 1-3, **characterized in that** component A) is selected from isocyanates comprising A2) 2,4'-diphenylmethane diisocyanate in an amount of ≤ 30 wt%, preferably 1-25 wt%, based on the total weight of component A).

5. The process according to any of claims 1-4, **characterized in that** said inorganic material has a water content of 7-25 wt%, based on the total weight of said inorganic material.

6. The process according to any of claims 1-5, **characterized in that** compared to the wood-based panel produced by the process not comprising mixing component B2), the wood-based panel produced by the process comprising mixing component B2) in an amount of 7-60 wt%, based on the total absolute dry weight of component B), has a density increased by ≥ 15%, preferably ≥ 20%.

7. The process according to any of claims 1-6, **characterized in that** compared to the wood-based panel produced by the process not comprising mixing component B2), the wood-based panel produced by the process comprising mixing component B2) in an amount of 7-60 wt%, based on the total absolute dry weight of component B), has a surface Shore D hardness increased by ≥ 10%, preferably ≥ 15%.

8. A wood-based panel produced by the process for preparing a wood-based panel according to any of claims 1-7.

9. The wood-based panel according to claim 8, **characterized in that** compared to the wood-based panel not comprising component B2), the wood-based panel produced by the process comprising mixing component B2) in an amount of 7-60 wt%, based on the total absolute dry weight of component B), has a density increased by ≥ 15%, preferably ≥ 20%.

10. The wood-based panel according to claim 8 or 9, **characterized in that** said wood-based panel has a surface Shore D hardness of ≥ 65D, preferably 65-90D, more preferably 70-89D.

11. The wood-based panel according to any of claims 8-10, **characterized in that** compared to the wood-based panel not comprising component B2), the wood-based panel produced by the process comprising mixing component B2) in an amount of 7-60 wt%, based on the total absolute dry weight of component B), has a Shore D hardness increased by ≥ 10%, preferably ≥ 15%.

12. The wood-based panel according to any of claims 8-11, **characterized in that** said wood-based panel has an elasticity modulus of ≥ 2446MPa, preferably ≥ 2600Mpa (testing method GB/T17657-2013).

13. The wood-based panel according to any of claims 8-12, **characterized in that** compared to the wood-based panel not comprising component B2), the wood-based panel produced by the process comprising mixing component B2) in an amount of 7-60 wt%, based on the total absolute dry weight of component B), has a elasticity modulus increased by ≥ 5%, preferably ≥ 10% (testing method GB/T17657-2013).

14. A wood-based panel product, comprising said wood-based panel according to any of claims 8-13.

15. The wood-based panel product according to claim 14, **characterized in that** said wood-based panel product comprises at least two layers, wherein at least one surface layer and at least one core or bottom layer, and the surface layer comprises said wood-based panel according to any of claims 8-13.
